# EUROPEAN PATENT APPLICATION

(11) **EP 4 567 837 A1**
(43) Date of publication of application: **11.06.2025**
(21) Application number: 23850095.3
(22) Date of filing: 01.08.2023
(51) Int. Cl.: H01B 1/22, C09J 9/02, C09J 11/04, C09J 11/06, C09J 163/00

(54) **CONDUCTIVE COMPOSITION, CONDUCTIVE ADHESIVE AND CURED PRODUCT**

(30) Priority: 02.08.2022 JP 2022123156
(71) Applicant: ThreeBond Co., Ltd., Tokyo 192-0398 (JP)
(72) Inventor: SUZUKI, Takashi, Hachioji-shi, Tokyo 192-0398 (JP); ENDO, Satoru, Hachioji-shi, Tokyo 192-0398 (JP)
(74) Representative: Crow, Martin
(86) International application number: PCT/JP2023/028175
(87) International publication number: WO 2024/029541

(57) **Abstract**

The present disclosure provides a means that can reduce connection resistance when an electroconductive composition is used to electrically connect base metals each other or electrically connect a base metal and another material. This means can reduce the connection resistance when at least one base metal is used as an object to be electrically connected. The present disclosure relates to an electroconductive composition containing components (A) to (D): a component (A): an epoxy resin; a component (B): a thermally curing agent; a component (C): a nickel powder as an electroconductive powder; and a component (D): an organoaluminum complex.

## Description

### TECHNICAL FIELD

The present invention relates to an electroconductive composition, an electroconductive adhesive, and a cured product.

### BACKGROUND ART

Base metals are metals easily oxidized in the air. Examples of the base metals include iron, aluminum, and zinc. As described in Japanese Patent Laid-Open No. 2007-269959, use of the base metal for an electrode member in electrically connecting two positions increases connection resistance on an interface between the electrode member and a cured product of an electroconductive adhesive, which consequently increases resistance of an entire circuit.

### SUMMARY OF INVENTION

For electrically connecting base metals each other or electrically connecting a base metal and another material by using an electroconductive composition, there were cases when it was difficult to reduce connection resistance.

The present inventors have made intensive investigation, and consequently found a technique that can reduce the connection resistance in electrically connecting the base metals each other or electrically connecting the base metal and another material by using the electroconductive composition, and then have come to complete the present invention. The present invention can reduce the connection resistance when at least one base metal is used as an object to be electrically connected (for example, an adherend etc.).

The gist of the present invention will be described below. At least one of the objects of the present invention can be achieved with an electroconductive composition containing components (A) to (D), according to the first embodiment of the present invention,
a component (A): an epoxy resin;
a component (B): a thermally curing agent;
a component (C): a nickel powder as an electroconductive powder; and
a component (D): an organoaluminum complex.

The present invention includes the following second to eleventh embodiments as non-limiting examples of preferable embodiments.

The second embodiment of the present invention is the electroconductive composition according to the first embodiment, wherein the component (A) consists only of an epoxy resin having three or more glycidyl groups in one molecule and an epoxy resin having two glycidyl groups in one molecule.

The third embodiment of the present invention is the electroconductive composition according to the first embodiment or the second embodiment, wherein the component (A) contains an epoxy resin having an amine structure.

The fourth embodiment of the present invention is the electroconductive composition according to any one of the first to third embodiments, wherein the component (D) is at least one selected from the group consisting of aluminum alkylacetoacetate diisopropylate, aluminum tris(acetylacetonate), aluminum monoacetylacetonate bis(ethylacetoacetate), and aluminum tris(ethylacetoacetate).

The fifth embodiment of the present invention is the electroconductive composition according to any one of the first to fourth embodiments, containing no powder other than the nickel powder, as the electroconductive powder.

The sixth embodiment of the present invention is the electroconductive composition according to any one of the first to fifth embodiments, containing no solvent.

The seventh embodiment of the present invention is the electroconductive composition according to any one of the first to sixth embodiments, further containing an antioxidant.

The eighth embodiment of the present invention is the electroconductive composition according to any one of the first to seventh embodiments, wherein the electroconductive composition is curable with only heating.

The ninth embodiment of the present invention is an electroconductive adhesive containing the electroconductive composition according to any one of the first to eighth embodiments.

The tenth embodiment of the present invention is a cured product formed by curing the electroconductive composition according to any one of the first to eighth embodiments with heating.

The eleventh embodiment of the present invention is the cured product according to the tenth embodiment, wherein a connection resistance when adhering to an aluminum substrate is 0.5 Ω or less.

Note that the present invention is not limited to only the above first to eleventh embodiments.

### DESCRIPTION OF EMBODIMENTS

The present invention will be then described in detail. The expression "X to Y" describing a range herein is used as a meaning including the values (X and Y) as a lower limit and an upper limit, and means "X or more and Y or less". Unless otherwise mentioned, operation and measurement of physical properties etc. herein are performed under a condition of room temperature (20 to 25°C) / relative humidity of 40 to 55 %RH. The expression "A and/or B" herein has a meaning including each of A and B and a combination thereof.

Hereinafter, the electroconductive composition according to one aspect of the present invention is also simply referred to as "electroconductive composition". The electroconductive adhesive according to another aspect of the present invention is also simply referred to as "electroconductive adhesive". The cured product according to another aspect of the present invention is also simply referred to as "cured product".

### <Electroconductive Composition>

One aspect of the present invention relates to an electroconductive composition comprising components (A) to (D),
a component (A): an epoxy resin;
a component (B): a thermally curing agent;
a component (C): a nickel powder as an electroconductive powder; and
a component (D): an organoaluminum complex.

The present invention can provide a means for reducing connection resistance in electrically connecting base metals each other or electrically connecting a base metal and another material by using an electroconductive composition. The present invention can reduce the connection resistance when at least one base metal is used as an object to be electrically connected (for example, an adherend).

Particularly, since aluminum forms a passive state on the surface, it is difficult to achieve electric connection between aluminum and the cured product of the electroconductive composition with breaking the passive state. Accordingly, it is preferable that the present invention can reduce the connection resistance when at least aluminum is used as an object to be electrically connected (for example, an adherend).

Hereinafter, each component contained in the electroconductive composition will be described.

### [Component (A)]

The component (A) that can be used in the present invention is an epoxy resin.

The epoxy resin is not particularly limited as long as the epoxy resin is a compound having at least one glycidyl group in one molecule. As the component (A), various epoxy resins can be used. The component (A) may be single or combination of two or more.

The component (A) preferably contains a compound having two or more glycidyl groups in one molecule, and more preferably consists only of the compound having two or more glycidyl groups in one molecule. From the viewpoint of increase in adhesion strength, the component (A) preferably contains an epoxy resin having three or more glycidyl groups in one molecule and an epoxy resin having two glycidyl groups in one molecule, and more preferably consists only of the epoxy resin having three or more glycidyl groups in one molecule and the epoxy resin having two glycidyl groups in one molecule. A content ratio between the epoxy resin having three or more glycidyl groups in one molecule and the epoxy resin having two glycidyl groups in one molecule is not particularly limited. The content ratio (mass ratio) between the epoxy resin having three or more glycidyl groups in one molecule and the epoxy resin having two glycidyl groups in one molecule is preferably the epoxy resin having three or more glycidyl groups in one molecule : the epoxy resin having two glycidyl groups in one molecule = 10:90 to 40:60, and more preferably the epoxy resin having three or more glycidyl groups in one molecule : the epoxy resin having two glycidyl groups in one molecule = 20:80 to 30:70.

The number of glycidyl groups in one molecule in the epoxy resin having three or more glycidyl groups in one molecule is not particularly limited. From the viewpoints of reducing the connection resistance and increasing an adhesive force between the base metal and the cured product of the electroconductive composition, the number of glycidyl groups in one molecule in the epoxy resin having three or more glycidyl groups in one molecule is preferably three or more and six or less, more preferably three or more and five or less, further preferably three or more and four or less, and particularly preferably three.

An epoxy equivalent of the component (A) is not particularly limited. From the viewpoint that there are cases when more excellent curability is exhibited, the epoxy equivalent is preferably 50 g/eq or more and less than 300 g/eq, more preferably 70 g/eq or more and less than 250 g/eq, and further preferably 90 to 230 g/eq. The epoxy equivalent herein is a value measured in accordance with JIS K-7236:2001. If the epoxy equivalent cannot be determined by this method, the epoxy equivalent may be calculated as a value of a molecular weight of the target epoxy resin (compound) divided by the number of epoxy groups contained in one molecule of the epoxy resin (compound).

From the viewpoint of being able to more reduce viscosity of the electroconductive composition, the component (A) preferably contains an epoxy resin having a molecular weight (calculation value of total of atomic weights) of 500 or less, more preferably contains an epoxy resin having a molecular weight (calculation value of total of atomic weights) of 300 or less, and further preferably contains an epoxy resin having a molecular weight (calculation value of total of atomic weights) of 250 or less. The component (A) may contain an epoxy resin having a molecular weight (calculation value of total of atomic weights) of 200 or less.

The epoxy resin having two or more glycidyl groups in one molecule is not particularly limited. Thus, each of the epoxy resin having three or more glycidyl groups in one molecule and the epoxy resin having two glycidyl groups in one molecule is also not particularly limited. Examples of the epoxy resin having two or more glycidyl groups in one molecule include: a glycidyl-ether-type epoxy resin (for example, glycidyl-ether epoxy resins such as bisphenol A type, brominated bisphenol A type, hydrogenated bisphenol A type, bisphenol F type, bisphenol S type, bisphenol AF type, biphenyl type, naphthalene type, fluorene type, novolac type, phenol novolac type, ortho-cresol novolac type, tris(hydroxyphenyl)methane type, and tetraphenylolethane type) obtained by condensation etc. between epichlorohydrin, and polyvalent phenols (for example, bisphenols etc.), a polyhydric alcohol or an aniline derivative; a glycidyl-ester-type epoxy resin obtained by condensation etc. between epichlorohydrin, and a phthalic acid derivative or a carboxylic acid such as a fatty acid; an epoxy resin having an amine structure; and a modified epoxy resin obtained by modification of an epoxy resin with various methods. The epoxy resin having an amine structure is not particularly limited, and examples thereof preferably include glycidylamine-type epoxy resin (also simply referred to as "amine-type epoxy resin" herein). The glycidylamine-type epoxy resin herein refers to an epoxy resin having at least one glycidylamino group and/or at least one diglycidylamino group. The amine-type epoxy resin is not particularly limited, and examples thereof include a glycidylamine-type epoxy resin obtained by a reaction etc. between epichlorohydrin, and amines, cyanuric acids or hydantoins. Thus, specific examples of each of the epoxy resin having three or more glycidyl groups in one molecule and the epoxy resin having two glycidyl groups in one molecule include same types of epoxy resins as the epoxy resins described as the specific examples of the epoxy resin having two or more glycidyl groups in one molecule. Note that the specific examples of the epoxy resin having two or more glycidyl groups in one molecule, the specific examples of the epoxy resin having three or more glycidyl groups in one molecule, and the specific examples of the epoxy resin having two glycidyl groups in one molecule are respectively not limited thereto. Each of the epoxy resin having two or more glycidyl groups in one molecule, the epoxy resin having three or more glycidyl groups in one molecule, and the epoxy resin having two glycidyl groups in one molecule may be single or combination of two or more.

From the viewpoint of increase in adhesion strength, the component (A) preferably contains the epoxy resin having an amine structure. The epoxy resin having an amine structure is not particularly limited, but preferably the amine-type epoxy resin. Preferable specific examples of the epoxy resin having an amine structure include a compound represented by the following general formula 1. In the following general formula 1, R represents hydrogen, an organic group having no glycidyl group, or an organic group having a glycidyl group. Among these, R preferably represents hydrogen or a methyl group, and more preferably a methyl group. The compound represented by the general formula 1 is included in the epoxy resin having two or more glycidyl groups in one molecule. That is, the compound represented by the general formula 1 is included in the compound having two or more glycidyl groups in one molecule. Commercial products of the epoxy resin having an amine structure are not particularly limited, but examples thereof include jER (Registered trademark) 630 and jER (Registered trademark) 604, manufactured by Mitsubishi Chemical Corporation; and GOT and GAN, manufactured by Nippon Kayaku Co., Ltd. Note that the commercial products of the epoxy resin having an amine structure are not limited thereto.

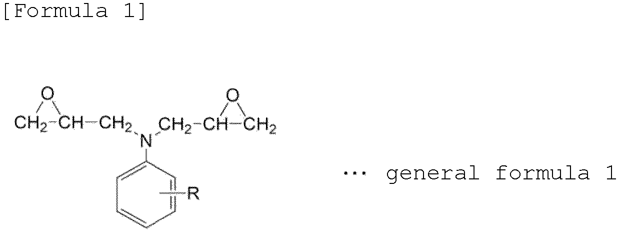

GOT, manufactured by Nippon Kayaku Co., Ltd., is a compound having a structure represented by the following general formula 1-1. GAN, manufactured by Nippon Kayaku Co., Ltd., is a compound having a structure represented by the following general formula 1-2.

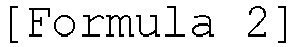

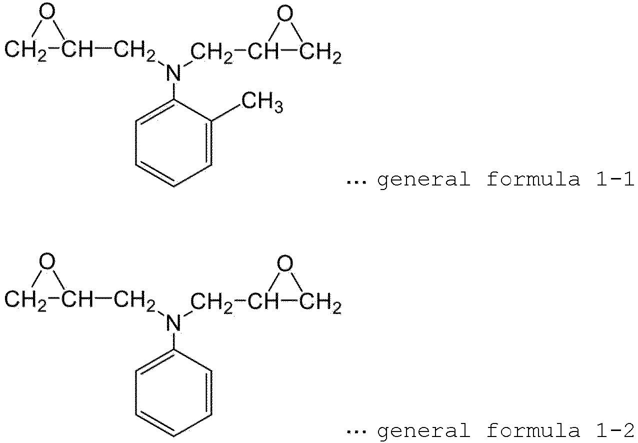

When the component (A) contains the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the epoxy resin having an amine structure, and both of the epoxy resin having three or more glycidyl groups in one molecule and the epoxy resin having two glycidyl groups in one molecule more preferably contain the epoxy resin having an amine structure.

When the component (A) consists of the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the epoxy resin having an amine structure, and both of the epoxy resin having three or more glycidyl groups in one molecule and the epoxy resin having two glycidyl groups in one molecule more preferably contain the epoxy resin having an amine structure.

When the component (A) contains the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the amine-type epoxy resin, and both of the epoxy resin having three or more glycidyl groups in one molecule and the epoxy resin having two glycidyl groups in one molecule more preferably contain the amine-type epoxy resin.

When the component (A) consists of the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the amine-type epoxy resin, and both of the epoxy resin having three or more glycidyl groups in one molecule and the epoxy resin having two glycidyl groups in one molecule more preferably contain the amine-type epoxy resin.

When the component (A) contains the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the compound represented by the general formula 1, and both of the epoxy resin having three or more glycidyl groups in one molecule and the epoxy resin having two glycidyl groups in one molecule more preferably contain the compound represented by the general formula 1.

When the component (A) consists of the epoxy resin having three or more glycidyl groups in one molecule and the epoxy resin having two glycidyl groups in one molecule, at least one selected from the group consisting of the epoxy resin having three or more glycidyl groups in one molecule and the epoxy resin having two glycidyl groups in one molecule preferably contains the compound represented by the general formula 1, and both of the epoxy resin having three or more glycidyl groups in one molecule and the epoxy resin having two glycidyl groups in one molecule more preferably contain the compound represented by the general formula 1.

When the component (A) contains the epoxy resin having three or more glycidyl groups in one molecule and the epoxy resin having two glycidyl groups in one molecule, the epoxy resin having two glycidyl groups in one molecule preferably contains a bisphenol type epoxy resin, and more preferably contains a bisphenol F type epoxy resin.

When the component (A) consists of the epoxy resin having three or more glycidyl groups in one molecule and the epoxy resin having two glycidyl groups in one molecule, the epoxy resin having two glycidyl groups in one molecule preferably contains the bisphenol type epoxy resin, and more preferably contains the bisphenol F type epoxy resin.

When the component (A) contains the epoxy resin having three or more glycidyl groups in one molecule and the epoxy resin having two glycidyl groups in one molecule, the epoxy resin having two glycidyl groups in one molecule preferably contains the bisphenol type epoxy resin and the epoxy resin having an amine structure, more preferably contains the bisphenol type epoxy resin and the amine-type epoxy resin, further preferably contains the bisphenol type epoxy resin and the compound represented by the general formula 1, and particularly preferably contains the bisphenol F type epoxy resin and the compound represented by the general formula 1.

When the component (A) consists of the epoxy resin having three or more glycidyl groups in one molecule and the epoxy resin having two glycidyl groups in one molecule, the epoxy resin having two glycidyl groups in one molecule preferably contains the bisphenol type epoxy resin and the epoxy resin having an amine structure, more preferably contains the bisphenol type epoxy resin and the amine-type epoxy resin, further preferably contains the bisphenol type epoxy resin and the compound represented by the general formula 1, and particularly preferably contains the bisphenol F type epoxy resin and the compound represented by the general formula 1.

The component (A) may contain a compound having only one glycidyl group in one molecule, and may not contain the compound having only one glycidyl group in one molecule. The epoxy resin having only one glycidyl group in one molecule is not particularly limited. Specific examples of the epoxy resin having only one glycidyl group in one molecule include phenyl glycidyl ether, cresyl glycidyl ether, p-t-butylphenyl glycidyl ether, 2-ethylhexyl glycidyl ether, butyl glycidyl ether, C12 to C14 alcohol glycidyl ether, butane diglycidyl ether, hexane diglycidyl ether, cyclohexane dimethyl diglycidyl ether, and a glycidyl ether based on polyethylene glycol or polypropylene glycol. Note that the specific examples of the epoxy resin having only one glycidyl group in one molecule are not limited thereto. The compound having only one glycidyl group in one molecule may be single or combination of two or more. In one embodiment, in view of toughness of the cured product, the epoxy resin having only one glycidyl group in one molecule is preferably not added. That is, the component (A) in one embodiment preferably does not contain the epoxy resin having only one glycidyl group in one molecule.

As the component (A), commercial products may be used, or synthesized products may be used. Examples of the commercial products of the component (A) include EPICLON (Registered trademark) EXA-835LV, manufactured by DIC Corporation. Among the component (A), examples of commercial products of the epoxy resin having an amine structure include the products described above. Note that the commercial products of the component (A) are not limited thereto.

### [Component (B)]

The component (B) that can be used in the present invention is a thermally curing agent. The thermally curing agent refers to a curing agent and/or a curing accelerator used for curing the component (A): epoxy resin with heating. The component (B) is preferably solid at 25°C from the viewpoint of being able to manufacture a one-liquid composition, and more preferably powdery at 25°C from the viewpoint of exhibiting latency due to the powdery form.

The type of the thermally curing agent used as the component (B) is not particularly limited. Specific examples of the thermally curing agent include: alkylimidazole compounds such as 2-methylimidazole, 2-ethylimidazole, and 2-propylimidazole; arylimidazole compounds such as 2-phenyl-4-methyl-5-hydroxylmethylimidazole, phenylimidazole, and naphthylimidazole; aminoalkylimidazole compounds such as 2-aminoethylimidazole and 2-aminopropylimidazole; hydrazide compounds such as adipic dihydrazide, eicosanedioic dihydrazide, 7,11-octadecadiene-1,18-dicarbohydrazide, and 1,3-bis(hydrazinocarboethyl) -5-isopropylhydantoin; an amine imide; a polyamine; dicyandiamide; tertiary phosphines; and an epoxy adduct compound obtained by reacting a glycidyl group in an epoxy resin, represented by, for example, a bisphenol A-type epoxy resin, and an amine compound to an intermediate stage, etc. The specific examples of the thermally curing agent is not limited thereto. The type of these thermally curing agents may be single, or combination of two or more types. In one embodiment, the component (B) more preferably contains at least one selected from the group consisting of an imidazole compound, a hydrazide compound, an amine imide, a polyamine, dicyandiamide, tertiary phosphines, and an epoxy adduct compound, more preferably contains at least one selected from the group consisting of an alkylimidazole compound, an arylimidazole compound, an aminoalkylimidazole compound, a hydrazide compound, an amine imide, a polyamine, dicyandiamide, tertiary phosphines, and an epoxy adduct compound, further preferably contains at least one selected from the group consisting of an arylimidazole compound and dicyandiamide, furthermore preferably contains at least one selected from the group consisting of 2-phenyl-4-methyl-5-hydroxymethylimidazole and dicyandiamide, and particularly preferably contains 2-phenyl-4-methyl-5-hydroxymethylimidazole, and dicyandiamide. From the viewpoint of toughness of the cured product, the component (B) is particularly preferably a combination of dicyandiamide as the curing agent and the imidazole compound as the curing accelerator. The component (B) preferably contains dicyandiamide and the imidazole compound, and the component (B) more preferably consists only of dicyandiamide and the imidazole compound. When the component (B) contains dicyandiamide and the imidazole compound, a content ratio between dicyandiamide and the imidazole compound is not particularly limited. The content ratio (mass ratio) between dicyandiamide and the imidazole compound is preferably dicyandiamide : the imidazole compound = 10:90 to 70:30, more preferably dicyandiamide : the imidazole compound =20:80 to 60:40, and further preferably dicyandiamide : the imidazole compound = 30:70 to 50:50. When the component (B) contains dicyandiamide and the imidazole compound, the imidazole compound is preferably the arylimidazole compound, and more preferably 2-phenyl-4-methyl-5-hydroxymethylimidazole.

When the component (B) is powdery, an average particle diameter of the component (B) is not particularly limited. The average particle diameter of the component (B) is preferably 0.1 µm or more, more preferably 1 µm or more, and further preferably 3 µm or more. The average particle diameter of the component (B) within these ranges can more sufficiently retain storage stability of the electroconductive composition. The average particle diameter of the component (B) is preferably 50 µm or less, more preferably 20 µm or less, and further preferably 10 µm or less. The average particle diameter of the component (B) within these ranges can more sufficiently retain curability of the electroconductive composition. In one embodiment, examples of the range of the average particle diameter of the component (B) include 0.1 µm or more and 50 µm or less, 1 µm or more and 20 µm or less, and 3 µm or more and 10 µm or less, but the average particle diameter of the component (B) is not limited to these ranges. The component (B) is preferably a powder finely crushed with an average particle diameter of 0.1 to 50 µm having latency (a powder having an average particle diameter of 0.1 to 50 µm and having latency), more preferably a powder having an average particle diameter of 1 to 20 µm and having latency, and further preferably a powder having an average particle diameter of 3 to 10 µm and having latency. When the component (B) contains dicyandiamide that is powdery at 25°C and an imidazole compound that is powdery at 25°C, relationship of average particle diameters thereof is not particularly limited, but the average particle diameter of the imidazole compound is preferably larger than the average particle diameter of dicyandiamide. The average particle diameter of the component (B) herein refers to a 50%-average particle diameter measured by a laser particle size meter. The 50%-average particle diameter measured by a laser particle size meter is a particle diameter (D50) at 50% of a cumulative volume proportion in particle size distribution determined by laser diffraction scattering.

As the component (B), commercial products may be used, or synthesized products may be used. Specific examples of the commercial products of the component (B) include jER-Cure (Registered trademark) DICY7, manufactured by Mitsubishi Chemical Corporation, and CUREZOL 2P4MHZ-PW, manufactured by SHIKOKU CHEMICALS CORPORATION. Among the component (B), specific examples of commercial products of a powdery epoxy adduct compound include AJICURE series, manufactured by Ajinomoto Fine-Techno Co., Inc., Fujicure series, manufactured by FUJI KASEI Co., Ltd., and NOVACURE series, manufactured by Asahi-Kasei Chemicals Corporation. The commercial products of the component (B) are not limited thereto.

The component (B) may be single or combination of two or more thereof.

A content of the component (B) is not particularly limited. The content of the component (B) is preferably 0.1 part by mass or more, more preferably 0.5 parts by mass or more, and further preferably 1 part by mass or more relative to 100 parts by mass of the component (A). Within these ranges, the curability is more improved. The content of the component (B) is preferably 100 parts by mass or less, more preferably 20 parts by mass or less, and further preferably 10 parts by mass or less relative to 100 parts by mass of the component (A). Within these ranges, storage stability of the electroconductive composition can be retained more sufficiently. Examples of the range of the content of the component (B) include 0.1 part by mass or more and 100 parts by mass or less relative to 100 parts by mass of the component (A), 0.5 parts by mass or more and 20 parts by mass or less relative to 100 parts by mass of the component (A), and 1 part by mass or more and 10 parts by mass or less relative to 100 parts by mass of the component (A). The content of the component (B) is not limited to these ranges. When the component (B) is 1 part by mass or more relative to 100 parts by mass of the component (A), the curability is exhibited particularly sufficiently, and when the component (B) is 10 parts by mass or less relative to 100 parts by mass of the component (A), storage stability of the electroconductive composition tends to be able to be retained particularly sufficiently. When two or more types of the epoxy resin are used as the component (A), the content of the component (A) is intended to be a total amount thereof. When two or more types of the thermally curing agent are used as the component (B), the content of the component (B) is intended to be a total amount thereof.

### [Component (C)]

The component (C) that can be used in the present invention is a nickel powder as an electroconductive powder. The term "nickel powder" herein refers to an aggregate of nickel particles or an aggregate of particles of which entire surfaces of the outermost surfaces are constituted with nickel.

The particle shape of the powder of the component (C) is not limited, and examples thereof include spherical, irregular, flake-shaped (scale-like), filament-like (needle-like), and dendric-like shapes. The shape of the component (C) is particularly preferably a filament shape. Thus, the component (C) preferably contains a filament-shaped powder, and the component (C) is more preferably a filament-shaped nickel powder as the electroconductive powder.

The component (C) is not particularly limited as long as it is the nickel powder as an electroconductive powder. Examples of the component (C) include a powder consisting essentially only of nickel, a powder having nickel-plated surfaces of metal having a coating composed of insulative metal oxide, and a powder having nickel-plated surfaces of an insulative material. These nickel powders may be single or combination of two or more. The insulative metal oxide herein refers to metal that forms a passive state on the metal surface and that does not exhibit electroconductivity in the cured product of the electroconductive composition regardless of a content thereof even when used for a purpose of imparting electroconductivity to the cured product of the electroconductive composition. The insulative metal oxide is not particularly limited, and specific examples thereof include copper powder, aluminum powder, and iron powder. The term "powder consisting essentially only of nickel" herein refers to particles having a nickel content of 99 mass% or more relative to the total mass of the powder (upper limit: 100 mass%). The content of nickel is particularly preferably 99.5 mass% or more relative to the total mass of the powder (upper limit: 100 mass%). In one embodiment, the component (C) preferably contains at least one selected from the group consisting of the powder consisting essentially only of nickel, the powder having nickel-plated surfaces of metal having a coating composed of insulative metal oxide, and the powder having nickel-plated surfaces of an insulative material, and the component (C) more preferably contains the powder consisting essentially only of nickel.

The average particle diameter of the component (C) is not particularly limited. The average particle diameter of the component (C) is preferably 0.1 µm or more, more preferably 0.5 µm or more, and further preferably 1 µm or more. Within these ranges, volume resistivity of the cured product of the electroconductive composition is more reduced. The average particle diameter of the component (C) is preferably 100 µm or less, more preferably 50 µm or less, and further preferably 30 µm or less. Within these ranges, precipitation of the particles in the electroconductive composition is more inhibited. Examples of the range of the average particle diameter of the component (C) include 0.1 µm or more and 100 µm or less, 0.5 µm or more and 50 µm or less, and 1 µm or more and 30 µm or less, but the average particle diameter of the component (C) is not limited to these ranges. The average particle diameter of the component (C) herein refers to a 50%-average particle diameter measured by a laser particle size meter. The 50%-average particle diameter measured by a laser particle size meter is a particle diameter (D50) at 50% of a cumulative volume proportion in particle size distribution determined by laser diffraction scattering.

The apparent density of the component (C) is not particularly limited. The apparent density of the component (C) is not particularly limited, but preferably 0.3 g/cm³ or more. The apparent density of the component (C) is not particularly limited, but preferably 2.5 g/cm³ or less, and more preferably 1.0 g/cm³ or less. In one embodiment, examples of preferable ranges of the apparent density of the component (C) include 0.3 g/cm³ or more and 2.5 g/cm³ or less and 0.3 g/cm³ or more and 1.0 g/cm³ or less, and the preferable range of the apparent density of the component (C) are not limited thereto. The apparent density of the component (C) can be evaluated by ASTM B329-20.

As the component (C), commercial products may be used, or synthesized products may be used. Examples of the commercial products of the component (C) include a nickel powder being spherical powder (NICKEL POWDER) TYPE 123 and a nickel powder being filament-shaped powder (NICKEL POWDER) TYPE 255, manufactured by Vale Corporation, and HCA-1 being a flake powder manufactured by Novamet Specialty Products Corporation. The commercial products of the component (C) are not limited thereto.

The component (C) may be single or combination of two or more thereof.

The term "content of electroconductive powder" herein refers to a total amount of the content of the nickel powder as an electroconductive powder and a content of an electroconductive powder other than the nickel powder, which is a component that can be contained as necessary described later. When the electroconductive composition further contains the electroconductive powder other than the nickel powder, the content of the electroconductive powder is a total amount of the content of the nickel powder as an electroconductive powder and a content of the electroconductive powder other than the nickel powder. When the electroconductive composition does not contain the electroconductive powder other than the nickel powder, the content of the electroconductive powder is the content of the nickel powder as an electroconductive powder. The content of the electroconductive powder is not particularly limited. The content of the electroconductive powder is preferably 40 mass% or more, more preferably 50 mass% or more, and further preferably 60 mass% or more relative to the total mass of the electroconductive composition. The content of the electroconductive powder is preferably 95 mass% or less, more preferably 90 mass% or less, and further preferably 80 mass% or less relative to the total mass of the electroconductive composition. In one embodiment, the content of the electroconductive powder is preferably 40 to 95 mass% in the entirety of the electroconductive composition (40 mass% or more and 95 mass% or less relative to the total mass of the electroconductive composition) from the viewpoint of exhibiting better electroconductivity of the cured product of the electroconductive composition. Examples of the range of the content of the electroconductive powder include 50 mass% or more and 90 mass% or less relative to the total mass of the electroconductive composition and 60 mass% or more and 80 mass% or less relative to the total mass of the electroconductive composition. Note that the content of the electroconductive powder is not limited to these ranges. When two or more types of the nickel powder as an electroconductive powder are used, the content of the nickel powder as an electroconductive powder is intended to be a total amount thereof. When two or more types of the electroconductive powder other than the nickel powder are used, the content of the electroconductive powder other than the nickel powder is intended to be a total amount thereof.

The content of the component (C) is not particularly limited. The content of the component (C) is preferably 10 parts by mass or more, more preferably 50 parts by mass or more, and further preferably 100 parts by mass or more relative to 100 parts by mass of the component (A). Within this range, electroconductivity of the cured product of the electroconductive composition is more improved. The content of the component (C) is preferably 1,000 parts by mass or less, more preferably 500 parts by mass or less, and further preferably 300 parts by mass or less relative to 100 parts by mass of the component (A). Within this ranges, viscosity of the electroconductive composition can be reduced more sufficiently and/or the thixotropy can be reduced more sufficiently, and the adhesive force with the cured product of the electroconductive composition can be more increased. Examples of the range of the content of the component (C) include 10 parts by mass or more and 1,000 parts by mass or less relative to 100 parts by mass of the component (A), 50 parts by mass or more and 500 parts by mass or less relative to 100 parts by mass of the component (A), and 100 parts by mass or more and 300 parts by mass or less relative to 100 parts by mass of the component (A). The content of the component (C) is not limited to these ranges. When the component (C) is 100 parts by mass or more relative to 100 parts by mass of the component (A), electroconductivity of the electroconductive cured product is exhibited more sufficiently. When the component (C) is 300 parts by mass or less relative to 100 parts by mass of the component (A), viscosity of the electroconductive composition can be reduced more sufficiently and/or the thixotropy can be reduced more sufficiently, and the adhesive force with the cured product of the electroconductive composition can be more increased. When two or more types of the epoxy resin are used as the component (A), the content of the component (A) is intended to be a total amount thereof. When two or more types of the electroconductive powder are used as the component (C), the content of the component (C) is intended to be a total amount thereof.

### [Component (D)]

The component (D) that can be used in the present invention is an organoaluminum complex. Although the reason is unclear, the present inventors have found that use in combination of the component (C) and the component (D) can specifically reduce connection resistance relative to a base metal, specifically connection resistance relative to aluminum, and then have completed the present invention.

The component (D) is not particularly limited. The component (D) is preferably a compound having a structure in which an organic ligand is coordinated to aluminum (complex in which an organic ligand is coordinated to aluminum), and more preferably a compound having a structure in which an organic ligand is coordinated to a trivalent aluminum ion (complex in which an organic ligand is coordinated to a trivalent aluminum ion). Examples of a preferable component (D) include a compound having a structure represented by the following general formula 2. In the general formula 2, n represents an integer of 0 to 3, R¹ each independently represents a hydrogen atom or an organic group, and R² represents an alkoxy group. In the general formula 2, n preferably represents an integer of 0 to 3, R¹ each independently represents an alkoxy group, an alkenyloxy group (R'-O- group, wherein R' represents an alkenyl group), or an alkyl group, and R² preferably represents an alkoxy group. In the general formula 2, n may represent an integer of 0 to 3, R¹ may each independently represent an alkoxy group or an alkyl group, and R² may represent an alkoxy group. In the general formula 2, R¹ more preferably each independently represents an alkoxy group or an alkyl group. In the general formula 2, n preferably represents 1 or 3. In at least one of partial structures in the n parentheses in the general formula 2, R¹ more preferably each independently represents an alkyl group or an alkenyloxy group. In all the partial structures in the n parentheses in the general formula 2, R¹ further preferably each independently represents an alkyl group or an alkenyloxy group. In all the partial structures in the n parentheses in the general formula 2, R¹ particularly preferably represents an alkyl group.

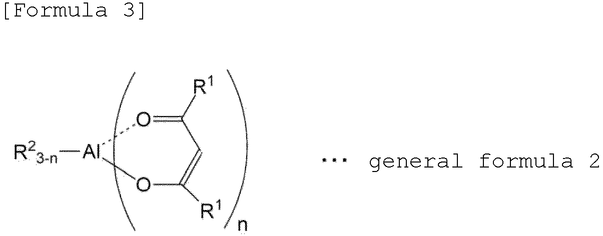

Examples of the component (D) include aluminum alkylacetoacetate diisopropylate, aluminum tris(acetylacetonate), aluminum monoacetylacetonate bis(ethylacetoacetate), and aluminum tris(ethylacetoacetate), but the component (D) is not limited to these. These compounds may be single or combination of two or more. The component (D) preferably contains at least one selected from the group consisting of these compounds.

In one embodiment, the component (D) preferably contains the compound having the structure in which an organic ligand is coordinated to aluminum, and more preferably consists only of the compound having the structure in which an organic ligand is coordinated to aluminum.

In one embodiment, the component (D) preferably contains the compound having the structure in which an organic ligand is coordinated to a trivalent aluminum ion, and more preferably consists only of the compound having the structure in which an organic ligand is coordinated to a trivalent aluminum ion.

In one embodiment, the component (D) preferably contains the compound having the structure represented by the general formula 2, and more preferably consists only of the compound having the structure represented by the general formula 2.

In one embodiment, the component (D) is preferably at least one selected from the group consisting of aluminum alkylacetoacetate diisopropylate, aluminum tris(acetylacetonate), aluminum monoacetylacetonate bis(ethylacetoacetate), and aluminum tris(ethylacetoacetate), more preferably at least one selected from the group consisting of aluminum alkylacetoacetate diisopropylate, aluminum tris(acetylacetonate), and aluminum monoacetylacetonate bis(ethylacetoacetate), and further preferably aluminum tris(acetylacetonate).

As the component (D), commercial products may be used, or synthesized products may be used. Specific examples of the commercial products of the component (D) include Aluminum chelate M, Aluminum chelate A, Aluminum chelate D, and ALCH-TR, manufactured by Kawaken Fine Chemicals Co., Ltd. The commercial products of the component (D) are not limited thereto.

The component (D) may be single or combination of two or more.

The content of the component (D) is not particularly limited. The content of the component (D) is preferably 0.1 part by mass or more, more preferably 1 part by mass or more, further preferably 2.5 parts by mass or more, and particularly preferably 5 parts by mass or more relative to 100 parts by mass of the component (A). The content of the component (D) is preferably 20 parts by mass or less, more preferably 15 parts by mass or less, further preferably 10 parts by mass or less, and particularly preferably 8 parts by mass or less relative to 100 parts by mass of the component (A). Examples of the range of the content of the component (D) include 0.1 to 20 parts by mass relative to 100 parts by mass of the component (A), 1.0 to 15 parts by mass relative to 100 parts by mass of the component (A), 1 to 15 parts by mass relative to 100 parts by mass of the component (A), 2.5 to 15 parts by mass relative to 100 parts by mass of the component (A), 2.5 to 10 parts by mass relative to 100 parts by mass of the component (A), 5 to 10 parts by mass relative to 100 parts by mass of the component (A), and 5 to 8 parts by mass relative to 100 parts by mass of the component (A). The content of the component (D) is not limited to these ranges. The content of the component (D) of 0.1 part by mass or more relative to 100 parts by mass of the component (A) more reduces connection resistance between the base metal and the cured product of the electroconductive composition. The content of the component (D) of 20 parts by mass or less relative to 100 parts by mass of the component (A) can more sufficiently retain storage stability of the composition. When two or more types of the epoxy resin are used as the component (A), the content of the component (A) is intended to be a total amount thereof. When two or more types of the organoaluminum complex are used as the component (D), the content of the component (D) is intended to be a total amount thereof.

### [Other Components]

The electroconductive composition may incorporate (contain) another component, for example, a coloring agent such as a pigment or a dye, a plasticizer, an antioxidant, a defoamer, a solvent, an adhesion imparting agent, a leveling agent, a rheology controlling agent, an electroconductive powder other than the nickel powder, etc., in an appropriate amount to the extent that the effect of the present invention is not impaired, or may not contain another component. Addition of another component can yield the electroconductive composition and the cured product thereof having more excellent properties, resin strength, adhesion strength, operability, storability, etc. according to the type of the added component. Note that a content of the solvent is preferably 0.1 mass% or less, and more preferably 0.01 mass% or less (lower limit: 0 mass%) relative to the total mass of the electroconductive composition because the solvent causes outgas. The electroconductive composition particularly preferably contains no solvent. When two or more types of the solvent are used, the content of the solvent is intended to be a total amount thereof.

### (Antioxidant)

The electroconductive composition may further contain the antioxidant to the extent that the effect of the present invention is not impaired, or may not contain the antioxidant. The antioxidant is not particularly limited. As the antioxidant, a phenol-type antioxidant, a hindered-phenol-type antioxidant, an organic-sulfur-type antioxidant, an amine-type antioxidant, a benzotriazole-type antioxidant, etc. may be used, for example. Among these, the benzotriazole-type antioxidant is preferable, and 1,2,3-benzotriazole is more preferable. The antioxidant may be single or combination of two or more. The antioxidant preferably contains at least one selected from the group consisting of a phenol-type antioxidant, a hindered-phenol-type antioxidant, an organic-sulfur-type antioxidant, an amine-type antioxidant, and a benzotriazole-type antioxidant, more preferably contains the benzotriazole-type antioxidant, and further preferably contains 1,2,3-benzotriazole. A content of the antioxidant is not particularly limited. The content of the antioxidant is preferably 0.01 part by mass or more, more preferably 0.1 part by mass or more, and further preferably 0.5 parts by mass or more relative to 100 parts by mass of the component (A). The content of the antioxidant is preferably 10 parts by mass or less, more preferably 5 parts by mass or less, and further preferably 2 parts by mass or less relative to 100 parts by mass of the component (A). Examples of the range of the content of the antioxidant include 0.01 part by mass or more and 10 parts by mass or less relative to 100 parts by mass of the component (A), 0.1 part by mass or more and 5 parts by mass or less relative to 100 parts by mass of the component (A), and 0.5 parts by mass or more and 2 parts by mass or less relative to 100 parts by mass of the component (A). The content of the antioxidant is not limited to these ranges. When two or more types of the epoxy resin are used as the component (A), the content of the component (A) is intended to be a total amount thereof. When two or more types of the antioxidant are used, the content of the antioxidant is intended to be a total amount thereof.

### (Coupling Agent)

In the electroconductive composition, a coupling agent may be typically used in order to improve adhesiveness. That is, the electroconductive composition may contain the coupling agent or may not contain the coupling agent. Specifically, a silane-based coupling agent having a hydrolysable silyl group (also simply referred to as "hydrolysable silyl-group-containing coupling agent" herein) has a risk of reaction with the compound (D) to deteriorate the effect, which is preferably not used. A content of the hydrolysable silyl-group-containing coupling agent is preferably 0.1 mass% or less, and more preferably 0.01 mass% or less (lower limit: 0 mass%) relative to the total mass of the electroconductive composition. The electroconductive composition further preferably contains no hydrolysable silyl-group-containing coupling agent. When two or more types of the hydrolysable silyl-group-containing coupling agent are used, the content of the hydrolysable silyl-group-containing coupling agent is intended to be a total amount thereof.

### (Electroconductive Powder other than Nickel Powder)

The electroconductive powder other than the nickel powder may be further added (contained) in the electroconductive composition, or the electroconductive powder other than the nickel powder may not be contained. Examples of the electroconductive powder other than the nickel powder include silver powder. As the electroconductive powder other than the nickel powder, commercial products may be used. Examples of the commercial products include Silbest TC-506, manufactured by TOKURIKI KAGAKU KENKYUSHO KK., but the commercial products of the electroconductive powder other than the nickel powder are not limited thereto.

A content of the electroconductive powder other than the nickel powder is preferably 50 mass% or less, more preferably 10 mass% or less, further preferably 1 mass% or less, and particularly preferably 0.1 mass% or less (lower limit: 0 mass%) relative to the total mass of the electroconductive powder. To more reduce connection resistance, it is particularly preferable that only the component (C) be used as the electroconductive powder. That is, the electroconductive composition particularly preferably contains only the component (C) as the electroconductive powder. In one embodiment, the electroconductive composition particularly preferably contains no powder other than the nickel powder, as the electroconductive particles. When two or more types of the electroconductive powder other than the nickel powder are used, the content of the electroconductive powder other than the nickel powder is intended to be a total amount thereof.

### [Form of Electroconductive Composition]

The form of the electroconductive composition is not particularly limited. The form of the electroconductive composition may be one-liquid type in which the components are mixed for one liquid agent or may be two-liquid type in which the components are separated for two liquid agents. Among these, the one-liquid type is preferable from the viewpoint of operation of the composition.

### [Method for Manufacturing Electroconductive Composition]

The electroconductive composition can be manufactured by mixing the components. The mixing method and the mixing condition are each not particularly limited. In the case of two-liquid type in which the components are separated for two liquid agents, the components to constitute each of the liquid agents are mixed to manufacture each of the liquid agents.

### [Usage of Electroconductive Composition]

An object for which the electroconductive composition is applied is not particularly limited. The base metal contained in the object for which the electroconductive composition is applied is not particularly limited, but preferably iron, aluminum, or zinc, and more preferably aluminum. The base metal contained in the object for which the electroconductive composition is applied is preferably at least one selected from the group consisting of iron, aluminum, and zinc, and more preferably aluminum. Examples of the object for which the electroconductive composition is applied include a substrate with a material of the base metal (that is, a metal easily oxidized in the air, for example, iron, aluminum, zinc, etc.) and an electrode material with a material of the base metal (for example, iron, aluminum, zinc, etc.). Usage of the electroconductive composition is not particularly limited, and examples thereof include adhesion, sealing, and coating. Among these, the electroconductive composition is preferably used for adhesion between adherends. The electroconductive composition may be singly used as an electroconductive adhesive, or may be used as an electroconductive adhesive by mixing with other components and/or other compositions. Accordingly, it can be said that another aspect of the present invention relates to an electroconductive adhesive containing the electroconductive composition according to the present aspect.

The electroconductive adhesive may contain a coupling agent, or may not contain a coupling agent. In one embodiment, the electroconductive adhesive preferably contains the coupling agent. The electroconductive composition containing the coupling agent may be used as the electroconductive adhesive. A method for manufacturing the electroconductive adhesive containing the coupling agent is not particularly limited, and may include mixing the electroconductive composition containing the coupling agent with other components, as necessary, or may include mixing the electroconductive composition containing no coupling agent with the coupling agent.

### <Method for Curing Electroconductive Composition and Cured Product of Electroconductive Composition>

A method for curing the electroconductive composition is not particularly limited, and the electroconductive composition preferably has thermal curability, and is preferably curable with heating. To increase adhesion strength in usage as the adhesive, the electroconductive composition is preferably cured with only heating. Thus, in one embodiment, the electroconductive composition is preferably curable with heating. A heating apparatus is not particularly limited, and examples thereof include a hot-air drying furnace and an infrared ray (IR) furnace. The curing temperature is not particularly limited, and may be 80 to 200°C, for example. Examples of the curing method within this temperature range include a curing method under an atmosphere at 80 to 200°C. The curing time is not particularly limited, and may be 10 to 120 minutes, for example.

Another aspect of the present invention relates to a cured product formed by curing the electroconductive composition according to one aspect of the present invention described above. The cured product is preferably a cured product formed by curing the electroconductive composition according to one aspect of the present invention described above with heating. Connection resistance of the cured product when adhering to a substrate composed of the base metal is not particularly limited. In one embodiment, the connection resistance of the cured product when adhering to a substrate composed of at least one base metal is preferably 0.5 Ω or less, more preferably 0.4 Ω or less, further preferably 0.3 Ω or less, and particularly preferably 0.25 Ω or less. In one embodiment, the connection resistance of the cured product when adhering to an aluminum substrate is preferably 0.5 Ω or less, more preferably 0.4 Ω or less, further preferably 0.3 Ω or less, and particularly preferably 0.25 Ω or less. A method for measuring the connection resistance will be described in Examples. When a substrate composed of the base metal other than aluminum is used, the substrate composed of the base metal other than aluminum is used instead of the aluminum substrate in the measurement method described in Examples.

The embodiments of the present invention have been described in detail, but the description is explanatory and exemplary but not limitedly, and it is obvious that the scope of the present invention should be interpreted with the attached claims.

### EXAMPLES

Next, the present invention will be described in more detail with Examples, but the present invention is not limited to only these Examples. Hereinafter, the electroconductive composition is also simply referred to as "composition".

### [Examples 1 to 12 and Comparative Examples 1 and 2]

To formulate electroconductive compositions, the following components were prepared.

### <<Component (A): Epoxy Resin>>

- Trifunctional amine-type epoxy resin (jER (Registered trademark) 630, manufactured by Mitsubishi Chemical Corporation)
- Bifunctional bisphenol F-type epoxy resin (EPICLON (Registered trademark) EXA835LV, DIC Corporation)
- Bifunctional amine-type epoxy resin (GOT, manufactured by Nippon Kayaku Co., Ltd.)

### <<Component (B): Thermally Curing Agent>>

- Dicyandiamide (powdery at 25°C, average particle diameter: 3.3 µm) (jER-Cure (Registered trademark) DICY7, manufactured by Mitsubishi Chemical Corporation)
- 2-Phenyl-4-methyl-5-hydroxymethylimidazole (powdery at 25°C, average particle diameter: 5.5 µm) (CUREZOL 2P4MHZ-PW, manufactured by SHIKOKU CHEMICALS CORPORATION)

### <<Component (C): Nickel Powder as Electroconductive Powder>>

- Filament-shaped nickel powder with average particle diameter: 2.5 µm, apparent density: 0.55 g/cc (0.55 g/cm³) (NICKEL POWDER TYPE 255, nickel content relative to total mass of powder: more than 99.7 mass%, manufactured by Vale Corporation)

### <<Component (C'): Electroconductive Powder other than Nickel Powder>>

- Silver powder with average particle diameter: 5.5 µm, tap density: 5.3 g/cm³, specific surface area: 0.28 m²/g (Silbest TC-506, manufactured by TOKURIKI KAGAKU KENKYUSHO KK.)

### <<Component (D): Organoaluminum Complex>>

- Aluminum alkylacetoacetate diisopropylate (Aluminum chelate M, manufactured by Kawaken Fine Chemicals Co., Ltd.)
- Aluminum tris(acetylacetonate) (Aluminum chelate A, manufactured by Kawaken Fine Chemicals Co., Ltd.)
- Aluminum monoacetylacetonate bis(ethylacetoacetate) (Aluminum chelate D, manufactured by Kawaken Fine Chemicals Co., Ltd.)
- Aluminum tris(ethylacetoacetate) (ALCH-TR, manufactured by Kawaken Fine Chemicals Co., Ltd.)

### <<Antioxidant>>

### - 1,2,3-Benzotriazole (reagent)

Here, the trifunctional amine-type epoxy resin has three glycidyl groups in one molecule. The bifunctional bisphenol F-type epoxy resin and the bifunctional amine-type epoxy resin each have two glycidyl groups in one molecule.

To formulate the composition, the component (A), the component (B), the component (D), and the antioxidant were weighed and fed into a stirring vessel for a stirring apparatus. To form a uniformly mixed state, the mixture was stirred for 30 minutes. Thereafter, the component (C) (and/or the component (C')) was weighed and fed into the identical stirring vessel, and the mixture was further stirred for 30 minutes. Table 1 describes detailed formulation amounts. In Table 1, all values are described as "parts by mass".

**[Table 1]**

| (Table 1) Electroconductive compositions according to Examples and Comparative Examples | | | | | | | | |
|---|---|---|---|---|---|---|---|---|
| Component | Raw material | Example 1 | Example 2 | Example 3 | Example 4 | Example 5 | Example 6 | Example 7 |
| Component (A) | 630 | 25.0 | 25.0 | 25.0 | 25.0 | 25.0 | 25.0 | 25.0 |
| | EXA-835LV | 41.7 | 41.7 | 417 | 41.7 | 41.7 | 41.7 | 41.7 |
| | GOT | 33.3 | 33.3 | 33.3 | 33.3 | 33.3 | 33.3 | 33.3 |
| Component (B) | DICY7 | 2.5 | 2.5 | 2.5 | 2.5 | 2.5 | 2.5 | 2.5 |
| | 2P4MHZ | 3.5 | 3.5 | 3.5 | 3.5 | 3.5 | 3.5 | 3.5 |
| Component (C) | 255 | 250 | 250 | 250 | 250 | 250 | 250 | 250 |
| Component (C') | TC-506 | | | | | | | |
| Component (D) | Aluminum chelate M | 2.0 | 5.0 | 10.0 | | | | |
| | Aluminum chelate A | | | | 2.0 | 5.0 | 10.0 | |
| | Aluminum chelate D | | | | | | | 2.0 |
| | ALCH-TR | | | | | | | |
| Antioxidant | 1,2,3-Benzotriazole | 0.8 | 0.8 | 0.8 | 0.8 | 0.8 | 0.8 | 0.8 |
| Total | | 358.8 | 361.8 | 366.8 | 358.8 | 361.8 | 366.8 | 358.8 |

| Component | Raw material | Example 8 | Example 9 | Example 10 | Example 11 | Example 12 | Comparative Example 1 | Comparative Example 2 |
|---|---|---|---|---|---|---|---|---|
| Component (A) | 630 | 25.0 | 25.0 | 25.0 | 25.0 | 25.0 | 25.0 | 25.0 |
| | EXA-835LV | 41.7 | 41.7 | 41.7 | 41.7 | 41.7 | 41.7 | 41.7 |
| | GOT | 33.3 | 33.3 | 33.3 | 33.3 | 33.3 | 33.3 | 33.3 |
| Component (B) | DICY7 | 2.5 | 2.5 | 2.5 | 2.5 | 2.5 | 2.5 | 2.5 |
| | 2P4MHZ | 3.5 | 3.5 | 3.5 | 3.5 | 3.5 | 3.5 | 3.5 |
| Component (C) | 255 | 250 | 250 | 250 | 250 | 150 | 250 | |
| Component (C') | TC-506 | | | | | 150 | | 250 |
| Component (D) | Aluminum chelate M | | | | | 5.0 | | 5.0 |
| | Aluminum chelate A | | | | | | | |
| | Aluminum chelate D | 5.0 | 10.0 | | | | | |
| | ALCH-TR | | | 2.0 | 5.0 | | | |
| Antioxidant | 1,2,3-Benzotriazole | 0.8 | 0.8 | 0.8 | 0.8 | 0.8 | 0.8 | 0.8 |
| Total | | 361.8 | 366.8 | 358.8 | 361.8 | 411.8 | 356.8 | 361.8 |

On Examples 1 to 12 and Comparative Examples 1 and 2, connection resistance measurement and adhesion strength measurement were performed. Table 2 summarizes the results.

### [Connection Resistance Measurement]

In a masking tape with 200 µm in thickness, five holes with 3 mm in diameter were made with an interval of 10 mm. This masking tape was adhered to an aluminum plate being a substrate with 25 mm in width × 100 mm in length × 1.6 mm in thickness, and the composition was applied on this masking tape by using a squeegee. Thereafter, the masking tape was peeled, and on the remained coating film at the five positions, a gold-plated chip with 2ϕ (2 mm in diameter) × 2 mm in height was each mounted to obtain an uncured test piece. Then, the uncured test piece was left for 30 minutes in a hot-air drying furnace in which the furnace inside was set to a 150°C atmosphere for curing the composition in the uncured test piece to produce a test piece. Subsequently, the test piece was taken out of the furnace, and after the temperature of the test piece was lowered to 25°C, the gold-plated chips adjacent to each other were contacted with a needle electrode. The resistance was measured with a digital multimeter, and the obtained value was specified as "connection resistance (Ω)". Here, the measured resistivity can be regarded as a total of: resistance of the gold-plated chips (×2); resistance of an interface between the gold-plated chip and the cured product of the composition (×2); resistance of the cured product (×2); resistance of an interface between the cured product and the aluminum plate (×2); and resistance of the aluminum plate. Since the gold-plated chip and the aluminum plate have resistance of about zero, the resistance of the interface between the cured product and the aluminum plate is dominant for the connection resistance. From the viewpoint of stabilization of electroconductivity, the connection resistance is preferably 0.5 Ω or less, more preferably 0.4 Ω or less, further preferably 0.3 Ω or less, and particularly preferably 0.25 Ω or less.

### [Adhesion Strength Measurement]

On the test piece produced in the aforementioned connection resistance measurement, a digital force gauge with a contact (manufactured by Nidec-Shimpo Corporation (the name was changed to NIDEC DRIVE TECHNOLOGY CORPORATION)) was moved at 50 mm/min in a state of fixing the aluminum plate, and the chip was pressed with the contact in a direction perpendicular to a long side of the test piece to measure "maximum strength (N)". The "adhesion strength (MPa)" (n=5 in average) was calculated with conversion from the adhesion area and found to be 5 MPa or more in all Examples and Comparative Examples.

**[Table 2]**

| (Table 2) Connection resistance | | | | | | | |
|---|---|---|---|---|---|---|---|
| Test item | Example 1 | Example 2 | Example 3 | Example 4 | Example 5 | Example 6 | Example 7 |
| Connection resistance | 0.35 | 0.23 | 0.23 | 0.36 | 0.21 | 0.24 | 0.44 |

| Test item | Example 8 | Example 9 | Example 10 | Example 11 | Example 12 | Comparative Example 1 | Comparative Example 2 |
|---|---|---|---|---|---|---|---|
| Connection resistance | 0.27 | 0.23 | 0.36 | 0.29 | 0.47 | 0.75 | 10 |

With comparison between Examples 1 to 11 and Comparative Example 1, it was confirmed that no addition of the component (D) shifted the connection resistance to be higher even with using the nickel powder.

It is known that silver powder has better electric conductivity than nickel powder. Thus, as for volume resistivity of the cured product of the electroconductive composition, a value when using the silver powder as the electroconductive particles is expected to be lower than a value when using the nickel powder as the electroconductive particles. However, it has been found that tendency of the connection resistance between the cured product of the electroconductive composition and the substrate is different from the expected tendency of the volume resistivity of the cured product of the electroconductive composition when the aluminum substrate is used as the substrate. Specifically, with comparison between Examples 1 to 11 and Comparative Example 2, it was confirmed that Comparative Example 2 exhibited extremely high connection resistance despite the composition of Comparative Example 2 being a so-called silver paste. Further, the composition of Example 12 contained the silver powder and also contained the nickel powder as the electroconductive particles, and it was confirmed that Example 12 exhibited smaller connection resistance than in Comparative Example 1 and Comparative Example 2.

### Industrial Applicability

Although being inexpensively usable, the base metal is a metal easily oxidized in the air, and unsuitable for use as the electrode material. However, according to the present invention, two positions can be electrically connected even with the base metal that easily forms a passive state (particularly preferably aluminum). Therefore, the present invention can broaden possibility of use of the base metal as the electrode material in electric and electronic parts using the base metal.

The present application is based on the Japanese patent application No. 2022-123156, filed on August 2, 2022. The disclosed contents thereof are entirely incorporated herein by reference.

## Claims

1. An electroconductive composition comprising components (A) to (D) :
a component (A): an epoxy resin;
a component (B): a thermally curing agent;
a component (C): a nickel powder as an electroconductive powder; and
a component (D): an organoaluminum complex.

2. The electroconductive composition according to claim 1, wherein the component (A) consists only of an epoxy resin having three or more glycidyl groups in one molecule and an epoxy resin having two glycidyl groups in one molecule.

3. The electroconductive composition according to claim 1, wherein the component (A) comprises an epoxy resin having an amine structure.

4. The electroconductive composition according to claim 1, wherein the component (D) is at least one selected from the group consisting of aluminum alkylacetoacetate diisopropylate, aluminum tris(acetylacetonate), aluminum monoacetylacetonate bis(ethylacetoacetate), and aluminum tris(ethylacetoacetate) .

5. The electroconductive composition according to claim 1, comprising no powder other than the nickel powder, as the electroconductive powder.

6. The electroconductive composition according to claim 1, comprising no solvent.

7. The electroconductive composition according to claim 1, further comprising an antioxidant.

8. The electroconductive composition according to claim 1, wherein the electroconductive composition is curable with only heating.

9. An electroconductive adhesive, comprising the electroconductive composition according to any one of claims 1 to 8.

10. A cured product formed by curing the electroconductive composition according to any one of claims 1 to 8 with heating.

11. The cured product according to claim 10, wherein a connection resistance when adhering to an aluminum substrate is 0.5 Ω or less.
